Europäisches Patentamt

European Patent Office

Office européen des brevets

(19)

(11) Veröffentlichungsnummer: **0 207 342**
**B1**

(12) **EUROPÄISCHE PATENTSCHRIFT**

(45) Veröffentlichungstag der Patentschrift:
21.03.90

(51) Int. Cl.⁴: **F02G 5/02,** H02K 7/00

(21) Anmeldenummer: 86108068.7

(22) Anmeldetag: 12.06.86

(54) Anordnung zur Zurückgewinnung von Verlustleistung einer Verbrennungskraftmaschine.

(30) Priorität: 24.06.85 DE 3522549

(43) Veröffentlichungstag der Anmeldung:
07.01.87 Patentblatt 87/2

(45) Bekanntmachung des Hinweises auf die Patenterteilung:
21.03.90 Patentblatt 90/12

(84) Benannte Vertragsstaaten:
AT CH DE FR GB IT LI

(56) Entgegenhaltungen:
DE-C- 197 483
FR-A- 729 008
FR-A- 997 986
FR-A- 1 229 766
FR-A- 1 400 187
GB-A- 358 359
US-A- 4 134 054

(73) Patentinhaber: Siemens Aktiengesellschaft,
Wittelsbacherplatz 2, D-8000 München 2(DE)

(72) Erfinder: Rosenberg, Heinz, Dipl.-Ing., Dr.-Fidlerweg 15,
A-2752 Wöllersdorf(AT)

## Beschreibung

Die Erfindung bezieht sich auf eine Anordnung gemäß dem Oberbegriff des Patentanspruchs 1.

Eine solche Anordnung ist durch die E-OS 0 045 843 bekannt. Die optimale Ausnutzung einer derartigen Anordnung erfordert es, die gesamte jeweils verfügbare Antriebsleistung der Turbine zu verwerten, also stets mit voll beaufschlagter Turbine zu fahren. Nun ist einerseits die genannte Leistung und damit auch die vom Generator abgebbare und vom Elektromotor aufzunehmende Leistung von den jeweiligen Verlusten und somit vom Betriebszustand der Verbrennungskraftmaschine abhängig, also stark veränderlich. Andererseits kann auch die Drehzahl dieser Verbrennungskraftmaschine und damit die des sie entlastenden Elektromotors in einem betriebsmäßig gegebenen Bereich veränderlich sein, was insbesonders bei Fahrzeugantrieben der Fall ist. Es besteht demnach das Problem, eine veränderlich vorgegebene Generatorleistung von einem Elektromotor aufzunehmen, dessen Drehzahl gleichfalls veränderlich vorgegeben ist, wobei im allgemeinen – vor allem bei Fahrzeugantrieben – keine eindeutige Zuordnung zwischen diesen beiden jeweils vorgegebenen Betriebsgrößen besteht. Bei den bisher bekannten Anordnungen erfordert die Anpassung der vom Elektromotor aufgenommenen Leistung an die vom Generator abgebbare Leistung gesonderte Regeleinrichtungen, die einen bedeutenden technischen und kostenmäßigen Aufwand bedingen, der besonders bei Fahrzeugantrieben mit verhältnismäßig niedrigen Leistungen sowie großen Belastungs- und Drehzahlschwankungen nicht tragbar erscheint.

Durch die DE-C 197 483 ist eine Anordnung zur Ausnutzung der Auspuffgase bei Gasmaschinen bekannt, bei der eine von den Auspuffgasen angetriebene Turbine mit einem Generator gekuppelt ist, der einen mit der Welle der Gasmaschine gekuppelten Motor speist. Dabei sind der Generator und der Motor parallel an eine Akkumulatorenbatterie angeschlossen, so daß durch die Betteriespannung die Drehzahlen von Motor und Generator gegeben sind und durch das Speichervermögen der Batterie ein Belastungsausgleich für die Gasmaschine erzielt ist. Es wird darüber hinaus auch ein Betrieb ohne eine solche Batterie angegeben. In diesem Falle sollen der Generator und der Motor je nach der vom Gasmotor zu liefernden Nutzleistung wechselweise als Motor oder Generator arbeiten und dadurch einen teilweisen Belastungsausgleich und eine entsprechende Drehzahlstabilisierung der Gasmaschine bewirken.

Im Gegensatz hierzu liegt der Erfindung die Aufgabe zugrunde, eine Anordnung gemäß dem Oberbegriff des Anspruches 1, bei der eine Turbine, deren Antriebsenergie aus Verlustwärme der Verbrennungskraftmaschine stammt, der mit ihr gekuppelte Generator und der die Verbrennungskraftmaschine entlastende Motor stets ihre Betriebsart beibehalten, so auszubilden, daß der Motor auch bei betriebsmäßig weitgehend veränderlicher Drehzahl die von der vollen beaufschlagten und in einem engen Drehzahlbereich arbeitenden Turbine über den Generator gelieferte Leistung ohne gesonderte Regeleinrichtung aufzunehmen vermag.

Diese Aufgabe wird nach der Erfindung durch die im Kennzeichen des Anspruchs 1 angegebenen Merkmale gelöst.

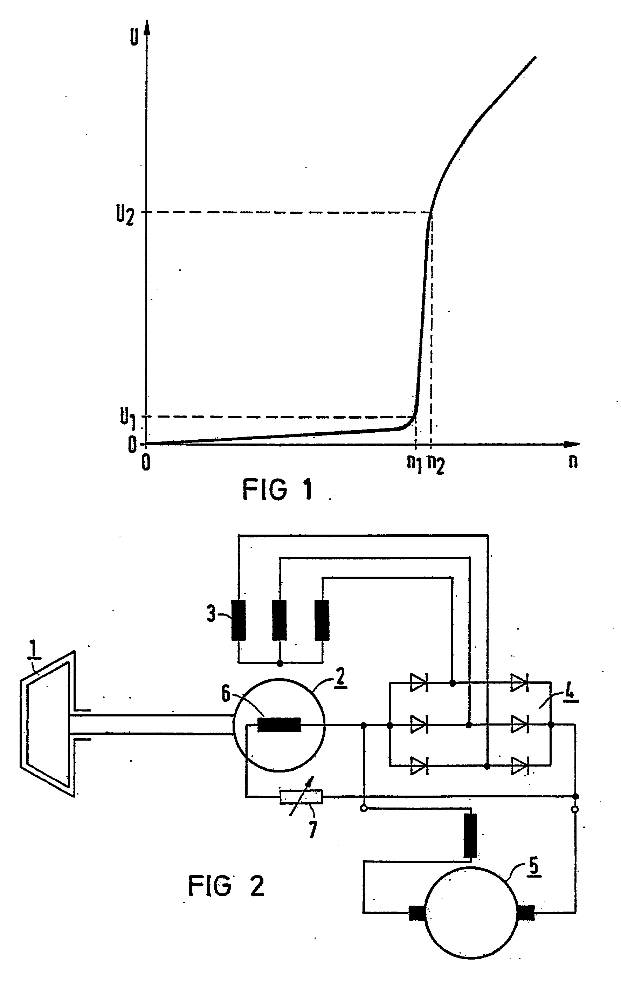

Eine solche Abhängigkeit, wie sie z.B. bei selbsterregten Gleichstrom-, Synchron- oder Asynchrongeneratoren im magnetisch ungesättigten Bereich auftritt, ist in Fig. 1 dargestellt. In dem engen Drehzahlbereich vom Eintritt der Selbsterregung bei der Generatordrehzahl $n_1$ bis zum Beginn der magnetischen Sättigung bei der Generatordrehzahl $n_2$ steigt die induzierte Spannung vom Wert $U_1$ steil auf den vielfach größeren Wert $U_2$ an. Es liegt somit eine drehzahllabile Selbsterregung vor. Der gleiche Verlauf der Spannung über der Drehzahl ist auch mit Eigenerregung des Generators durch eine selbsterregte Erregermaschine erzielbar. Die steile Drehzahlabhängigkeit der Generatorspannung kann auch mit anderen Mitteln als der Selbst- oder Eigenerregung erreicht oder zusätzlich verbessert werden.

Die von einem Gleichstrommotor aufgenommene Leistung steigt mit der zugeführten Spannung und sinkt mit wachsender Motordrehzahl.

Wird der Generator mit einer im Bereich $n_1 \leq n < n_2$ liegenden Drehzahl $n$ angetrieben und steigt, von einem Leistungsgleichgewicht zwischen voll beaufschlagter Turbine, Generator und Gleichstrommotor ausgehend, die Turbinenleistung an, so ergibt deren Überschuß zunächst ein Beschleunigungsmoment für die Turbine und den Generator, deren Drehzahl somit ansteigt. Es genügt jedoch eine geringe Drehzahlerhöhung, um die Generatorspannung so stark anwachsen zu lassen, daß der Gleichstrommotor die der vergrößerten Turbinenleistung entsprechende Generatorleistung aufnimmt. Das Beschleunigungsmoment verschwindet hiermit. Die Drehzahl von Turbine und Generator nimmt also nicht mehr weiter zu, das Leistungsgleichgewicht ist wieder hergestellt. Bei sinkender Turbinenleistung erfolgt die Leistungsanpassung in umgekehrtem Sinn durch eine geringfügige Drehzahlverminderung von Turbine und Generator.

Wird das Leistungsgleichgewicht vom Gleichstrommotor ausgehend gestört, z.B. indem seine ihm von der mit ihm gekuppelten Verbrennungskraftmaschine aufgedrückte Drehzahl zunimmt, also die Motor- und damit die Generatorleistung zunächst sinkt, so ergibt sich wieder ein Leistungsüberschuß der Turbine, der diese und den Generator um jene kleine Drehzahlzunahme beschleunigt, die durch Anwachsen der Generatorspannung das Leistungsgleichgewicht wieder herstellt. Umgekehrt folgt bei Verringerung der dem Gleichstrommotor aufgedrückten Drehzahl die Erneuerung des Leistungsgleichgewichtes durch eine geringfügige Drehzahlverminderung von Turbine und Generator.

Anhand mehrerer in der Zeichnung dargestellter Ausführungsbeispiele wird die Erfindung nachfolgend näher erläutert. Es zeigt:

Fig. 2 eine Prinzipschaltung mit einem selbsterregten Synchrongenerator, der über einen Lastgleichrichter einen Gleichstrom-Hauptschlußmotor speist,

Fig. 3 eine Prinzipschaltung mit einem eigenerregten Synchrongenerator, der über einen Lastgleichrichter einen Gleichstrommotor speist,

Fig. 4 den schematischen Längsschnitt und

Fig. 5 den schematischen Querschnitt eines permanentmagneterregten Synchrongenerators mit Außenläufer und einem mit Ringwicklung versehenen Ständer,

Fig. 6 das Anordnungsschema und

Fig. 7 die Prinzipschaltung einer Ringwicklung, die sowohl die Leistung eines Synchrongenerators abgibt als auch eine steuerbare Vormagnetisierung des Ständerjoches bewirkt,

Fig. 8 eine Prinzipschaltung eines über einen Lastgleichrichter einen Gleichstrommotor speisenden permanentmagneterregten Synchrongenerators und einer dessen Feld schwächenden, frequenzabhängig vormagnetisierten Drossel und

Fig. 9 die Prinzipschaltung eines Asynchrongenerators der über einen Lastgleichrichter einen Gleichstrommotor speist und mittels Reihenschwingkreisen selbsterregt ist.

Bei dem Ausführungsbeispiel nach Fig. 2 speist ein mit einer Turbine 1 gekuppelter Synchrongenerator 2 mit seiner induzierten Wicklung 3 über einen Lastgleichrichter 4 einen als Hauptschlußmotor ausgebildeten Gleichstrommotor 5. Vom Lastgleichrichter 4 wird über einen einstellbaren Widerstand 7 auch die Erregerwicklung 6 des Synchrongenerators 2 versorgt. Dies ergibt Selbsterregung mit dem in Fig. 1 dargestellten Verlauf der Generatorspannung über der Generatordrehzahl. Durch den Widerstand 7 kann der betriebsmäßig von $n_1$ bis $n_2$ reichende Bereich der Generatordrehzahl n verschoben und damit einer hinsichtlich des Wirkungsgrades günstigen Turbinendrehzahl angepaßt werden.

An die Stelle des Synchrongenerators 2 und des Lastgleichrichters 4 in Fig. 2 kann auch ein selbsterregter Gleichstrom-Nebenschlußgenerator treten. Einer solchen Maschine sind allerdings durch den Kommutator Drehzahlgrenzen gesetzt, die eine direkte Kupplung mit der Turbine 1 verbieten, wenn im Hinblick auf den Wirkungsgrad deren Drehzahl sehr hoch gewählt werden muß.

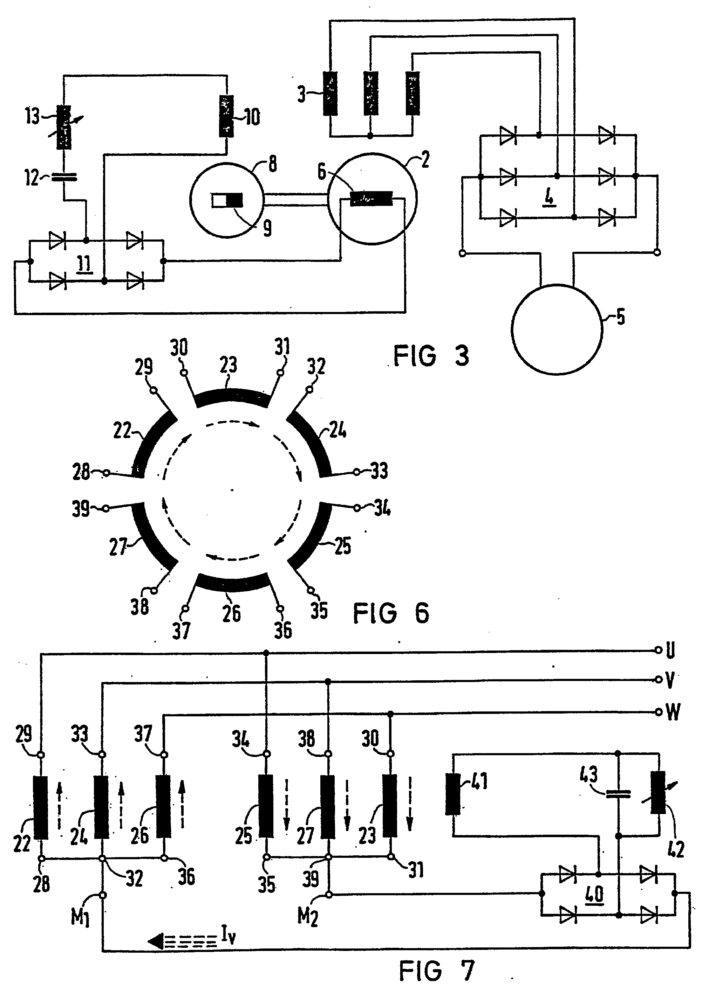

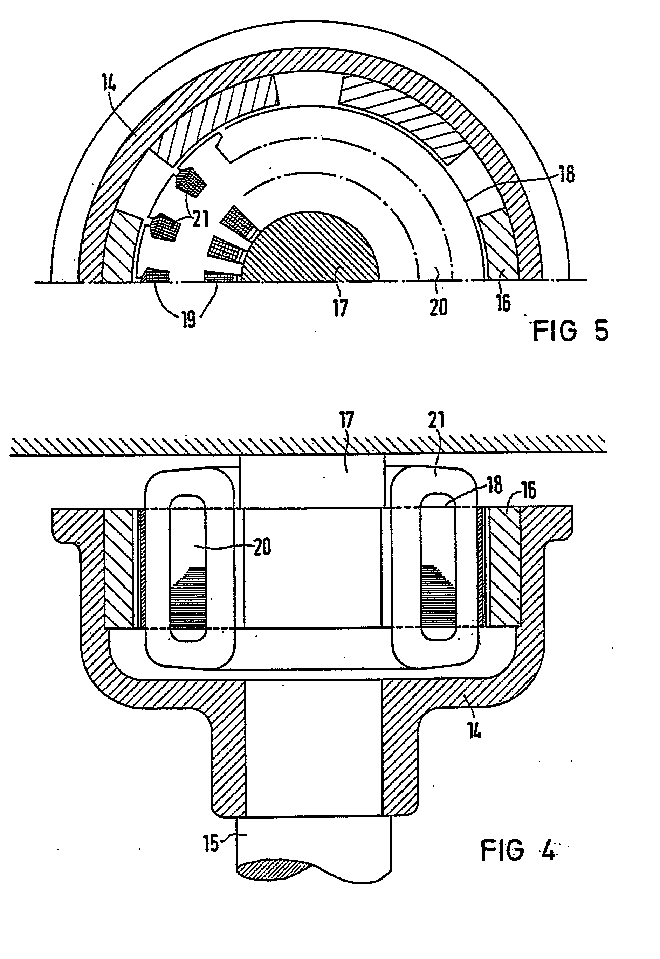

Bei der Schaltung nach Fig. 3 ist der Generator 2 ebenfalls ein Synchrongenerator, dessen induzierte Wicklung 3 über den Lastgleichrichter 4 einen Gleichstrommotor 5 speist. Mit dem Synchrongenerator 2 ist eine Erregermaschine 8 gekuppelt, deren Arbeitswicklung 10 über einen Erregergleichrichter 11 die Erregerwicklung 6 des Synchrongenerators 2 versorgt, der also mit Eigenerregung arbeitet. Die Erregermaschine 8 wird durch Permanentmagnete 9 erregt. Die in der Arbeitswicklung 10 induzierte Spannung wächst somit nur verhältnisgleich mit der Drehzahl und würde somit für sich allein keinen Spannungsverlauf gemäß Fig. 1 für den Synchrongenerator 2 bewirken. Dieser Verlauf wird erst durch einen Reihenschwingkreis erzielt, den die Arbeitswicklung 10 zusammen mit einer Drossel 13 und einem Kondensator 12 bildet und der so bemessen ist, daß seine Resonanzfrequenz gleich oder nur wenig größer ist, als die der oberen betriebsmäßigen Drehzahl $n_2$ (Fig. 1) entsprechende Fequenz der in der Arbeitswicklung 10 erzeugten Spannung. Der Reihenschwingkreis ergibt demnach einen im betriebsmäßigen Drehzahlbereich $n_1 \leq n \leq n_2$ mit steigender Drehzahl steil absinkenden Widerstand, wodurch der Erregerstrom in der Erregerwicklung 6 des Synchrongenerators 2 und damit die von diesem Generator erzeugte Spannung entsprechend zunimmt. Die Drossel 13 kann mit veränderbarer Induktivität ausgeführt sein, um die Resonanzfrequenz des Reihenschwingkreises und damit den für die steile Spannungsänderung maßgebenden Drehzahlbereich des Generators einer gewünschten Turbinendrehzahl anpassen zu können. Wenn auf die Einstellbarkeit der Drossel 13 verzichtet wird, kann diese Drossel auch entfallen, indem die Arbeitswicklung 10 so ausgebildet wird, daß ihre Induktivität ausreicht, um mit dem Kondensator 12 einen Reihenschwingkreis mit der erforderlichen Resonanzfrequenz zu bilden.

Die Anordnung mit Eigenerregung des Synchrongenerators 2 nach Fig. 3 hat gegenüber jener mit Selbsterregung arbeitenden Anordnung nach Fig. 2 den Vorteil, daß durch passende Bemessung des Reihenschwingkreises ein derartiger Verlauf des Erregerstromes des Synchrongenerators 2 über seiner Drehzahl erzielbar ist, daß diese Maschine im oberen betriebsmäßigem Spannungsbereich auch magnetisch gesättigt sein kann, wodurch ihre Ausnutzung verbessert wird. Ein weiterer Vorteil der nach Fig. 3 geschalteten Anordnung ergibt sich, wenn die Permanentmagnete 9 im Ständer und die Arbeitswicklung 10 sowie der Kondensator 12, die Drossel 13 und der Erregergleichrichter 11 im Läufer der Erregermaschine 8 untergebracht werden. Der Synchrongenerator 2 benötigt dann keine Schleifringe.

Der eigenerregte Synchrongenerator 2 kann auch eine selbsterregte Erregermaschine erhalten (in der Zeichnung nicht dargestellt), deren drehzahlabile Selbsterregung für den Synchrongenerator 2 einen Erregerstrom ergibt, der einen Verlauf der Generatorspannung gemäß Fig. 1 bewirkt.

Der Generator 2 kann auch eine permanentmagneterregte Synchronmaschine sein. Soll diese direkt mit einer hochtourigen Turbine gekuppelt werden, so kommt eine Reluktanzmaschine mit unbewickeltem Läufer in Frage, bei der sowohl die induzierte Wicklung 3 als auch die Permanentmagnete im Ständer angeordnet sind. Eine andere für extrem hohe Drehzahlen geeignete Bauart des Generators ist in den Fig. 4 und 5 in sechspoliger Ausführung dargestellt. Ein glockenförmiger eiserner Läuferkörper 14 ist auf einer Welle 15 fliegend angeordnet und trägt auf seiner Innenseite Permanentmagnete 16. Die Fliehkräfte dieser Permanentmagnete 16 werden vom Läuferkörper 14 aufgenommen. Das Ständerblechpaket 18 des Generators sitzt auf einem aus nichtmagnetisierbaren Werkstoff bestehenden Dorn 17 und weist auf seiner Außen- und an seiner Innenseite miteinander korrespondierende Nuten 19 auf. In diesen Nuten 19 ist eine Ringwicklung 21 untergebracht. Die geringe Ausladung ihrer Stirnverbindungen ermöglicht auch

bei kleiner Polzahl eine kurze axiale Baulänge des Läuferkörpers 14, was für fliegend angeordnete hochtourige Läufer wichtig ist. Die Ringwicklung 21 kann aus zwei getrennten Teilwicklungen bestehen, wobei die eine Teilwicklung die von den Permanentmagneten 16 induzierte Wicklung 3 des Generators 3 bildet und die andere Teilwicklung, mit Gleichstrom gespeist, dem Ständerjoch 20 eine tangentiale Vormagnetisierung erteilt. Je nach der Größe der durch diese Vormagnetisierung bewirkten magnetischen Sättigung des Ständerjoches werden die Flüsse der Permanentmagnete 16 mehr oder weniger geschwächt und damit die in der Wicklung 3 induzierten Spannung verändert.

Durch eine besondere Ausbildung und Schaltung der Ringwicklung 21 können die beiden vorstehend genannten Wicklungen vereinigt werden, d.h. die Leiter der Ringwicklung 21 führen gleichzeitig den vom Synchrongenerator 2 abgegebenen Wechselstrom und den Gleichstrom, der durch die Vormagnetisierung des Ständerjoches 20 die Generatorspannung steuert. Dies ergibt gegenüber getrennten Teilwicklungen eine bedeutende Einsparung von Wicklungsmetall und/oder Verminderung der Wicklungsverluste. Die Anordnung und Schaltung einer solchen vereinigten Ringwicklung 21 ist für eine zweipolige Ausführung in den Fig. 6 und 7 dargestellt.

Nach der Fig. 6 besteht die Ringwicklung aus sechs gleichartigen, um je 60° am Ständerumfang gegeneinander versetzten Wicklungssegmenten 22 bis 27, die gemäß Fig. 7 zu zwei dreiphasigen, im Stern geschalteten Wicklungsgruppen zusammengefaßt sind, deren gleichphasige äußere Wicklungsenden 29, 34 bzw. 33, 38 bzw. 30, 37 unmittelbar verbunden und zu den Ausgangsklemmen U, V, W geführt sind. Die Einspeisung des vormagnetisierenden Gleichstromes $I_V$ erfolgt über die getrennt herausgeführten Sternpunkte $M_1$ und $M_2$ der beiden Wicklungsgruppen. Jeder der drei Wicklungsstränge besteht aus zwei auf die beiden Wicklungsgruppen aufgeteilten Parallelzweigen, die, wie aus Fig. 6 hervorgeht, am Ständer um eine Polteilung versetzt angeordnet sind. Die beiden Sternpunkte $M_1$ und $M_2$ sind daher hinsichtlich der in den zwei gleichartigen Wicklungsgruppen von den Permanentmagneten 16 (Fig. 4 und 5) induzierten Spannungen äquipotential. Der den vormagnetisierenden Gleichstrom $I_V$ liefernde Steuerkreis bleibt also von den induzierten Wechselspannungen und -strömen frei. Umgekehrt sind die Ausgangsklemmen U, V, W hinsichtlich der an den beiden Sternpunkten $M_1$ und $M_2$ aufgedrückten Gleichspannung äquipotential, so daß keine Anteile des vormagnetisierenden Gleichstromes $I_V$ zu dem angeschlossenen Verbraucher (Lastgleichrichter 4 in den Fig. 2 und 3) fließen können. Der vormagnetisierende Gleichstrom $I_V$ teilt sich in den Wicklungen in drei Zweigströme auf, von denen jeder eines der drei Wicklungszweigpaare 22, 25 bzw. 24, 27 bzw. 26, 23 durchfließt. Die Richtung dieser Zweigströme ist durch gestrichelte Pfeile angedeutet. Eine Übertragung dieser Stromrichtungspfeile – unter Beibehaltung ihrer jeweiligen Richtung bezüglich der Wicklungsenden – von Fig. 7 in die Fig. 6 zeigt, daß jedes Wicklungssegment eine das Ständerjoch in der gleichen Umfangsrichtung vormagnetisierende Durchflutung liefert. Mit Zunahme dieser Durchflutung, also mit Zunahme des vormagnetisierenden Gleichstromes $I_V$, wächst auch die magnetische Sättigung des Ständerjoches und damit der magnetische Widerstand für die permanentmagnetischen Flüsse. Diese Flüsse und die von ihnen induzierten Spannungen nehmen demgemäß ab. Der vormagnetisierende Gleichstrom $I_V$ bewirkt also eine zu ihm gegensinnige Änderung der an den Ausgangsklemmen U, V, W abgegebenen Wechselspannung. Der vormagnetisierende Gleichstrom $I_V$ wird nach Fig. 7 von einer im Generatorständer angeordneten Hilfswicklung 41 über einen aus einer Drossel 42 und einem Kondensator 43 bestehenden Parallelschwingkreis und einen Steuergleichrichter 40 abgegeben. Die Hilfswicklung 41 kann auch durch einen Isoliertransformator ersetzt werden, der primär an die Wicklungssegmente 22 bis 27 oder einen Teil derselben angeschlossen ist und an dessen Sekundärseite der Parallelschwingkreis 42, 43 in Reihe mit dem Steuergleichrichter 40 angeschlossen ist. Der Parallelschwingkreis 42, 43 wird so bemessen, daß seine Resonanzfrequenz, bei der er stromsperrend wirkt, gleich oder nur wenig größer ist als die Frequenz der bei der oberen Drehzahl $n_2$ (Fig. 1) in der Hilfswicklung 41 induzierten Spannung, hingegen sein Widerstand bei der unteren Drehzahl $n_1$ nur gering ist. Demgemäß fließt bei der unteren Drehzahl $n_1$ ein vormagnetisierender Gleichstrom $I_V$, der das Ständerjoch stark sättigt und damit die induzierte Wechselspannung entsprechend drückt, wohingegen bei der oberen Drehzahl $n_2$ der vormagnetisierende Gleichstrom $I_V$ durch die Sperrwirkung des Parallelschwingkreises 42, 43 so vermindert ist, daß praktisch eine vollständige Entsättigung des Ständerjoches und damit das Maximum der induzierten Wechselspannung auftritt. Zwecks Einstellbarkeit der Resonanzfrequenz und damit des betriebsmäßigen Drehzahlbereiches $n_1 \leq n \leq n_2$ ist die Drossel 42 mit veränderbarer Induktivität ausgebildet.

Bei einer Ringwicklung der vorstehend erläuterten Wirkungsweise mit $2p > 2$ Polen erstreckt sich die Anordnung der sechs benachbarten Wicklungssegmente nach Fig. 6 nur über zwei Polteilungen und erst die einander entsprechenden p Segmente der p Polpaare bilden zusammen, z.B. hintereinander – oder parallelgeschaltet, die einzelnen Wicklungszweige nach Fig. 7.

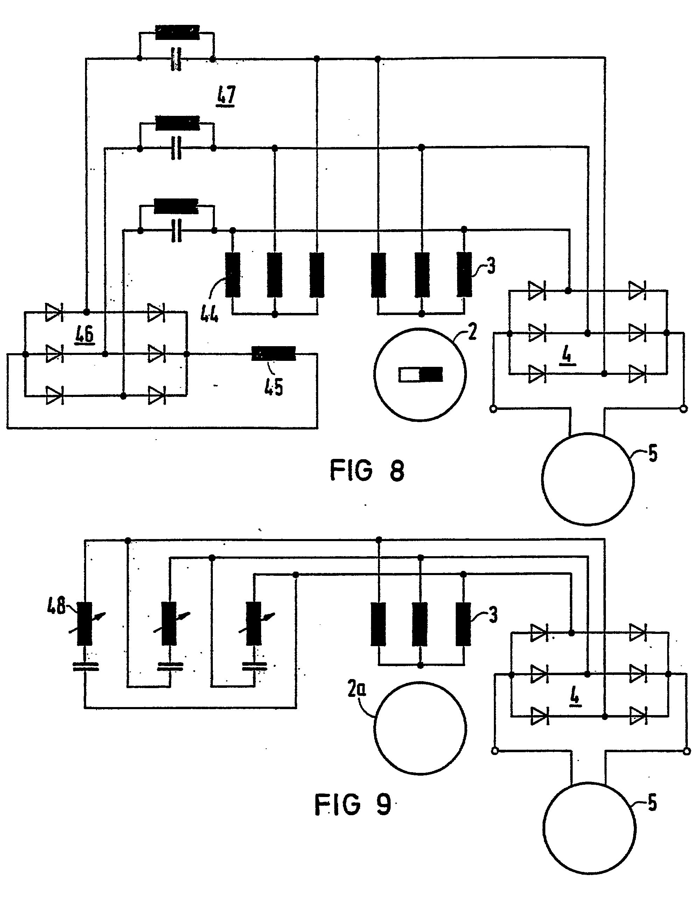

Fig. 8 zeigt eine andere Anordnung zur Erzielung eines steilen Verlaufes der Spannung des permanentmagneterregten Synchrongenerators 2 über seiner Drehzahl. Die induzierte Wicklung 3 dieser Maschine speist außer dem den Gleichstrommotor 5 versorgenden Lastgleichrichter 4 noch eine Drossel 44, deren Induktivität durch die gleichstromdurchflossene Vormagnetisierungswicklung 45 veränderbar ist. Die Vormagnetisierungswicklung 45 erhält ihren Strom von einem Gleichrichter 46, der über Parallelschwingkreise 47 an die induzierte Wicklung 3 des Synchrongenerators 2 angeschlossen ist. Die Resonanzfrequenz dieser Parallelschwingkreise 47 ist auch hier gleich oder nur wenig größer als die der oberen Betriebsdrehzahl $n_2$ entsprechende Spannungsfrequenz des Synchrongenerators 2. Somit ist bei der oberen Drehzahl $n_2$ der Strom der Vormagnetisierungswicklung 45 entsprechend klein, so daß die Drossel 44 entsättigt, also ihre Induktivität maximal ist. Die entsprechend geringe induktive Belastung des Synchrongenerators 2 hat auf sein permanentmagnetisches Feld keinen nennenswert schwächenden Einfluß, d.h. die Generatorspannung erreicht ihren Höchstwert. Hingegen bilden die entsprechend ausgelegten Parallelschwingkreise 47 bei der der unteren Betriebsdrehzahl $n_1$ entsprechenden Frequenz der Generatorspannung einen so geringen Widerstand, daß ein genügend großer Strom durch die Vormagnetisierungswicklung 45 fließt, um die Drossel 44 stark zu sättigen. Ihre Induktivität ist dann so gering, daß die entsprechend große induktive Belastung des Synchrongenerators 2 dessen Permanentmagnetfeld und damit die induzierte Spannung beträchtlich vermindert. Die Anordnung nach Fig. 8 besitzt den Vorteil, daß für den Synchrongenerator 2 jede Bauart einer permanenterregten Maschine geeignet ist.

Der über den Lastgleichrichter 4 den Gleichstrommotor 5 speisende Generator kann auch eine Asynchronmaschine 2a mit Selbsterregung durch kapazitive Blindwiderstände – im einfachsten Falle nur Kondensatoren – sein. Auch hier entspricht der Spannungsverlauf über der Drehzahl der Fig. 1. Um den betriebsmäßigen Drehzahlbereich einzuengen und Kondensatorkapazität einzusparen, können die kapazitiven Blindwiderstände, wie in Fig. 9 dargestellt, durch Reihenschwingkreise 48 gebildet sein, deren Resonanzfrequenz knapp über der der oberen Betriebsdrehzahl $n_2$ entsprechenden Frequenz der Generatorspannung liegt. Im Gegensatz zur Erregung mit Kondensatoren allein kann auf diese Weise im oberen Spannungsbereich auch eine gewisse magnetische Sättigung des Asynchrongenerators 2a zugelassen und damit dessen Ausnutzung verbessert werden, ohne den betriebsmäßigen Drehzahlbereich $n_1 \leq n \leq n_2$ nachteilig zu dehnen. Werden für die Reihenschwingkreise 48 Drosseln mit veränderbarer Induktivität eingesetzt, so besteht die Möglichkeit, die Resonanzfrequenz und damit den betriebsmäßigen Drehzahlbereich des Asynchrongenerators 2a und der Turbine 1 zu verschieben.

Für sehr hohe Drehzahlen ist es zweckmäßig, entweder den Läufer des Asynchrongenerators 2a als Außenläufer mit Kurzschlußkäfig auszubilden oder einen massiven Innenläufer – mit oder ohne Kurzschlußkäfig – vorzusehen.

Die Reihenschwingkreise 10, 12, 13 und 48 in den Fig. 3 und 9 sowie die Parallelschwingkreise 42, 43 und 47 in den Fig. 7 und 8 können auch durch bekannte gleichartig wirkende Kombinationen von mehreren Kondensatoren und/oder Drosseln je Schwingkreis ersetzt werden, mit denen ein steilerer Frequenzgang ihres Blindwiderstandes erzielbar ist, als bei den angeführten einfachen Schwingkreisen. Hierdurch läßt sich die Drehzahl- bzw.

Frequenzabhängigkeit der Spannung des Generators 2 bzw. 2a noch verbessern.

Für den Gleichstrommotor 5 kommen außer den üblichen Maschinen mit mechanischer Kommutierung auch solche mit elektronischer Kommutierung in Betracht. Letztere vor allem, wenn durch die Kupplung der Verbrennungskraftmaschine sehr hohe Motordrehzahlen gegeben sind, aber auch zur Vermeidung von fallweisen ungünstigen atmosphärischen Einflüssen auf einen Kommutator.

Da bei Hauptschlußmotoren der Spannungsverlauf über der Drehzahl wesentlich flacher ist als bei Nebenschlußmotoren, sind erstgenannte für die Ausführungsart des Gleichstrommotors 5 vorzuziehen (Fig. 2), da sich damit ein kleinerer betriebsmäßiger Spannungsbereich für den Generator 2 bzw. 2a ergibt. Der Gleichstrommotor 5 kann auch mit Fremd- oder Permanentmagneterregung versehen sein. In diesem Falle ist es zweckmäßig, im oberen Drehzahlbereich des Gleichstrommotors Schwächung seines Feldes vorzusehen, um den betriebsmäßigen Spannungsbereich des Generators 2 bzw. 2a zu verkleinern.

## Patentansprüche

1. Anordnung zur Zurückgewinnung von Verlustleistung einer Verbrennungskraftmaschine, bestehend aus einer Turbine (1), deren Antriebsenergie aus Verlustwärme der Verbrennungskraftmaschine stammt und die mit einem Generator (2 bzw. 2a) gekuppelt ist, dessen Wicklung (3) einen die Verbrennungskraftmaschine entlastenden Gleichstrommotor (5) speist, dadurch gekennzeichnet, daß der Generator (2 bzw. 2a) derart ausgebildet ist, daß die in seiner Generatorwicklung induzierte Spannung ohne Verwendung einer gesonderten Regelvorrichtung im betriebsmäßigen Drehzahlbereich mit zunehmender Drehzahl einen derartigen, von einem ersten Spannungswert (U1) auf einen zweiten Spannungswert (U2) steil ansteigenden Verlauf hat, wie er bei selbsterregten Generatoren in dem engen Drehzahlbereich vom Eintritt der Selbsterregung bei einer unteren Generatordrehzahl (n1) bis zum Beginn der magnetischen Sättigung bei einer oberen Generatordrehzahl (n2) vorliegt.

2. Anordnung nach Anspruch 1, **dadurch gekennzeichnet**, daß der Generator (2 bzw. 2a) eine drehzahllabil selbst- oder eigenerregte Maschine ist.

3. Anordnung nach Anspruch 2, **dadurch gekennzeichnet**, daß der Generator (2 bzw. 2a) im betriebsmäßigen Spannungsbereich magnetisch ungesättigt ist.

4. Anordnung nach Anspruch 2, **dadurch gekennzeichnet**, daß der Generator (2 bzw. 2a) oder ein seine Erregerwicklung (6) speisender Hilfsgenerator (Erregermaschine 8) in einem Wechselstromteil seines Erregerkreises Blindwiderstände (12, 13 bzw. 48) enthält.

5. Anordnung nach Anspruch 1, **dadurch gekennzeichnet**, daß der Generator (2) eine permanentmagneterregte Synchron- oder Gleichstrommaschine ist.

6. Anordnung nach Anspruch 5, **dadurch gekennzeichnet**, daß der Generator (2) einen Permanentmagnete (16) enthaltenden Außenläufer aufweist.

7. Anordnung nach einem der Ansprüche 5 oder 6, **dadurch gekennzeichnet**, daß der permanentmagnetische Nutzfluß des Generators (2) durch gleichstromerregte Vormagnetisierung eines Teiles seines Weges, vorzugsweise des Ständerjoches (20), im Sinne einer steilen gleichsinnigen Drehzahlabhängigkeit sättigungsgesteuert ist.

8. Anordnung nach Anspruch 7, **dadurch gekennzeichnet**, daß die Vormagnetisierung des Ständerjoches (20) durch eine gleichstromgespeiste Ringwicklung (21) bewirkt ist.

9. Anordnung nach Anspruch 8, **dadurch gekennzeichnet**, daß bei einem Wechselstromgenerator (2) die Ringwicklung (21) auch zumindest einen Teil der die Wechselspannung erzeugenden Wicklung (3) bildet.

10. Anordnung nach einem der Ansprüche 7 bis 9, **dadurch gekennzeichnet**, daß der die Vormagnetisierung des Ständerjoches (21) bewirkende Strom von einem Steuergleichrichter (40) stammt, der über zumindest einen Parallelschwingkreis (42, 43), dessen stromsperrende Resonanzfrequenz betriebsmäßig nicht überschritten wird, von einer Wechselspannung drehzahlproportionaler Frequenz gespeist ist.

11. Anordnung nach einem der Ansprüche 1 bis 6, **dadurch gekennzeichnet**, daß der Generator (2) eine Reluktanzmaschine mit unbewickeltem Läufer ist.

12. Anordnung nach einem der Ansprüche 5 oder 6, **dadurch gekennzeichnet**, daß der Generator ein Wechselstromgenerator (2) ist, der außer einem den Gleichstrommotor 5 versorgenden Lastgleichrichter (4) eine mit Gleichstrom vormagnetisierte Drossel (44) speist und die Vormagnetisierungswicklung (45) dieser Drossel (44) an einem Gleichrichter (46) liegt, der über zumindest einen Parallelschwingkreis (47), dessen Resonanzfrequenz betriebsmäßig nicht überschritten wird, von der Generatorwicklung (3) gespeist ist.

13. Anordnung nach Anspruch 1, **dadurch gekennzeichnet**, daß der Generator eine durch kapazitiv wirkende Blindwiderstände erregte Asynchronmaschine (2a) ist.

14. Anordnung nach Anspruch 13, **dadurch gekennzeichnet**, daß die kapazitiv wirkenden Blindwiderstände aus Reihenschwingkreisen (48) bestehen, deren Resonanzfrequenz oberhalb des betriebsmäßigen Frequenzbereiches liegt.

15. Anordnung nach einem der Ansprüche 13 oder 14, **dadurch gekennzeichnet**, daß der Asynchrongenerator (2a) einen Außenläufer mit Kurzschlußkäfig aufweist.

16. Anordnung nach einem der Ansprüche 13 oder 14, **dadurch gekennzeichnet**, daß der Asynchrongenerator (2a) einen unbewickelten oder nur mit Kurzschlußkäfig versehenen Massivläufer aufweist.

17. Anordnung nach einem der vorhergehenden Ansprüche, **dadurch gekennzeichnet**, daß der die Verbrennungskraftmaschine entlastende Gleichstrommotor (5) eine mechanisch oder elektrisch kommutierende Hauptschlußmaschine ist.

18. Anordnung nach einem der Ansprüche 1 bis 16, **dadurch gekennzeichnet**, daß der die Verbrennungskraftmaschine entlastende Gleichstrommotor (5) eine mechanisch oder elektronisch kommutierende Maschine mit Permanentmagnet- oder Fremderregung ist.

19. Anordnung nach Anspruch 18, **dadurch gekennzeichnet**, daß der Gleichstrommotor (5) in seinem oberen Drehzahlbereich mit Feldschwächung arbeitet.

**Claims**

1. An arrangement for recovering power loss of an internal combustion engine, comprising a turbine (1), the driving power of which comes from the heat loss of the internal combustion engine and which is coupled to a generator (2, 2a) whose winding (3) supplies a DC motor (5) relieving the load on the internal combustion engine, characterised in that the generator (2, 2a) is designed so that, without the use of a special regulating device, the voltage induced in the operational speed range has, with increasing speed, a steeply ascending course from a first voltage (U1) to a second voltage (U2) such as obtains in self-excited generators in the narrow speed range from the onset of self-excitation at a lower generator speed ($n_1$) to the start of magnetic saturation at an upper generator speed ($n_2$).

2. An arrangement according to claim 1, characterised in that the generator (2, 2a) is a selfexcited machine stable as to speed.

3. An arrangement according to claim 2, characterised in that the generator (2, 2a) is magnetically unsaturated in the operational voltage range.

4. An arrangement according to claim 2, characterised in that the generator (2, 2a) or an auxiliary generator (exciter machine 8) supplying its excitation winding (6) contains reactances (12, 13, 48) in an AC section of its excitation circuit.

5. An arrangement according to claim 1, characterised in that the generator (2) is a permanentmagnet-excited synchronous or DC machine.

6. An arrangement according to claim 5, characterised in that the generator (2) has an external rotor containing permanent magnets.

7. An arrangement according to claim 5 or claim 6, characterised in that the useful permanent magnetic flux of the generator (2) is saturation-controlled by DC induced premagnetisation of part of its path, preferably of the stator yoke (20), in the sense of a steep cumulative speed dependence.

8. An arrangement according to claim 7, characterised in that the premagnetisation of the stator yoke (20) is brought about by a DC-fed ring winding (21).

9. An arrangement according to claim 8, characterised in that in the case of an AC generator (2) the ring winding (21) also forms at least part of the winding (3) that produces the AC voltage.

10. An arrangement according to any one of claims 7 to 9, characterised in that the current bringing about the premagnetisation of the stator yoke (21) comes from a control rectifier (40) supplied, through at least one parallel resonant circuit (42, 43) of which the current-blocking resonant frequency is not exceeded in operation, with an AC voltage of frequency proportional to the speed.

11. An arrangement according to any one of claims 1 to 6, characterised in that the generator (2) is a reluctance machine with a windingless rotor.

12. An arrangement according to claim 5 or claim 6, characterised in that the generator is an AC generator (2) that supplies a DC premagnetised choke (44) as well as a Load rectifier (4) supplying the DC motor (5), and that the premagnetisation winding (45) of this choke (44) is fed by a rectifier (46) that is supplied through at least one parallel resonant circuit (47), the resonance frequency of which is not exceeded in operation, by the generator winding (3).

13. An arrangement according to claim 1, characterised in that the generator is an asynchronous machine (2a) excited by reactances of capacitative effect.

14. An arrangement according to claim 13, characterised in that the capacitative reactances comprise series-resonant circuits (48), the resonant frequency of which is above the operational frequency range.

15. An arrangement according to claim 13 or claim 14, characterised in that the asynchronous generator (2a) comprises an external rotor with a short-circuit cage.

16. An arrangement according to claim 13 or claim 14, characterised in that the asynchronous generator (2a) comprises a solid rotor that is either windingless or is provided only with a short-circuit cage.

17. An arrangement according to any one of the preceding claims, characterised in that the DC motor (5) relieving the internal combustion engine is a mechanically or electrically commutated series machine.

18. An arrangement according to any one of claims 1 to 16, characterised in that the DC motor (53) relieving the internal combustion machine is a mechanically or electronically commutated machine with permanent magnets or external excitation.

19. An arrangement according to claim 18, characterised in that the DC motor (5) operates in the upper part of its speed range with field weakening.

**Revendications**

1. Dispositif pour récupérer des puissances dissipées d'un moteur à combustion interne, comprenant une turbine (1) dont l'énergie d'entraînement provient de la puissance dissipée sous forme de chaleur du moteur thermique et qui est accouplé à une génératrice (2 ou 2a) dont l'enroulement (3) alimente un moteur à courant continu (5) qui soulage la charge du moteur thermique, caractérisé en ce que la génératrice (2 ou 2a) est réalisée de manière que la tension induite dans son enroulement de génératrice, sans l'utilisation d'un dispositif de réglage particulier, dans la plage des vitesses de fonctionnement, présente une allure qui, à mesure que la vitesse de rotation augmente, s'élève avec une forte pente d'une première valeur de tension (U1) à une deuxième valeur de tension (U2), allure comme celle qui existe, sur des génératrices auto-excitées, dans l'étroite plage des vitesses allant du commencement de l'autoexcitation, à une vitesse inférieure (n1) de la génératrice, jusqu'au début de la saturation magnétique à une vitesse supérieure (n2) de la génératrice.

2. Dispositif selon la revendication 1, caractérisé en ce que la génératrice (2 ou 2a) est une machine autoexcitée ou à excitation autonome à vitesse instable.

3. Dispositif selon la revendication 2, caractérisé en ce que la génératrice (2 ou 2a) est magnétiquement insaturée dans la plage de la tension de service.

4. Dispositif selon la revendication 2, caractérisé en ce que la génératrice (2 ou 2a), ou une génératrice auxiliaire (excitatrice 8) alimentant son enroulement d'excitation (6), contient des réactances (12, 13 ou 48) dans une partie à courant alternatif de son circuit d'excitation.

5. Dispositif selon la revendication 1, caractérisé en ce que la génératrice (3) est une machine synchrone ou une machine à courant continu à excitation par aimants permanents.

6. Dispositif selon la revendication 5, caractérisé en ce que la génératrice (2) comporte un rotor extérieur contenant des aimants permanents (16).

7. Dispositif selon la revendication 5 ou 6, caractérisé en ce que le flux utile de la génératrice (2), produit par des aimants permanents, est réglé en saturation par une prémagnétisation, générée par courant continu, d'une partie de son trajet, de préférence de la culasse statorique (20), en vue de l'obtention d'une dépendance de même sens et à pente raide de la vitesse de rotation.

8. Dispositif selon la revendication 7, caractérisé en ce que la prémagnétisation de la culasse statorique (20) est produite par un enroulement torique (21) alimenté en courant continu.

9. Dispositif selon la revendication 8, caractérisé en ce que, au cas où la génératrice (2) est constituée par un alternateur, l'enroulement torique (21) forme en même temps une partie au moins de l'enroulement (3) produisant la tension alternative.

10. Dispositif selon une des revendications 7 à 9, caractérisé en ce que le courant produisant la prémagnétisation de la culasse statorique (20) provient d'un redresseur de commande (40) qui est alimenté par une tension alternative dont la fréquence est proportionnelle à la vitesse de rotation, à travers au moins un circuit oscillant parallèle (42, 43) dont la fréquence de résonance, ayant un effet de blocage du courant, n'est pas dépassée dans la plage de fonctionnement.

11. Dispositif selon une des revendications 1 à 6, caractérisé en ce que la génératrice (2) est une machine à réluctance comportant un rotor non bobiné.

12. Dispositif selon la revendication 5 ou 6, caractérisé en ce que la génératrice est un alternateur (2) qui alimente, outre un redresseur de charge (4) assurant l'alimentation du moteur à courant continu (5), une bobine de self (44) prémagnétisée par courant continu et dont l'enroulement de prémagnétisation (45) est raccordé à un redresseur (46) alimenté par l'enroulement d'induit (3) de l'alternateur à travers au moins un circuit oscillant parallèle (47) dont la fréquence de résonance n'est pas dépassée dans la plage de fonctionnement.

13. Dispositif selon la revendication 1, caractérisé en ce que la génératrice est une machine asynchrone (2a) à réactances capacitives.

14. Dispositif selon la revendication 13, caractérisé en ce que les réactances capacitives sont formées de circuits oscillants série (48) dont la fréquence de résonance est située au-dessus de la plage de fréquence de fonctionnement.

15. Dispositif selon la revendication 13 ou 14, caractérisé en ce que l'alternateur asynchrone (2a) comporte un rotor extérieur avec une cage en court-circuit.

16. Dispositif selon la revendication 13 ou 14, caractérisé en ce que l'alternateur asynchrone (2a) comporte un rotor massif non bobiné ou possédant seulement une cage en court-circuit.

17. Dispositif selon une des revendications précédentes, caractérisé en ce que le moteur à courant continu (5), soulageant le moteur thermique, est un moteur série à commutation mécanique ou électrique.

18. Dispositif selon une des revendications 1 à 16, caractérisé en ce que le moteur à courant continu (5), soulageant le moteur thermique, est un moteur à commutation mécanique ou électronique et à excitation par aimants permanents ou à excitation indépendante.

19. Dispositif selon la revendication 18, caractérisé en ce que le champ du moteur à courant continu (5) est affaibli dans la partie supérieure de sa plage de vitesse.

FIG 1

FIG 2

**FIG 3**

**FIG 6**

**FIG 7**

EP 0 207 342 B1

FIG 5

FIG 4

FIG 8

FIG 9